# FASCICULE DE BREVET EUROPEEN

(11) **EP 3 762 800 B1**
(45) Date de publication et mention de la délivrance du brevet: **19.04.2023**
(21) Numéro de dépôt: 19717519.3
(22) Date de dépôt: 28.02.2019
(51) Int. Cl.: G05D 1/02, G08G 1/127, G08G 1/16, G08G 1/00

(54) **PROCÉDÉ D'ADAPTATION DE LA VITESSE DE VÉHICULES SE DÉPLAÇANT EN CONVOI**
VERFAHREN ZUR ANPASSUNG DER GESCHWINDIGKEIT VON FAHRZEUGEN, DIE IN FAHRZEUGKOLONNE FAHREN
METHOD FOR ADAPTING THE SPEED OF VEHICLES MOVING IN CONVOY

(30) Priorité: 08.03.2018 FR 1852013
(43) Date de publication de la demande: 13.01.2021
(73) Titulaire: Orange, 92130 Issy-les-Moulineaux (FR)
(72) Inventeur: BOUILLON, Marc, 92326 CHÂTILLON CEDEX (FR); BIHANNIC, Nicolas, 92326 CHÂTILLON CEDEX (FR)
(86) Numéro de dépôt international: PCT/FR2019/050464
(87) Numéro de publication internationale: WO 2019/170986

(56) Documents cités:
- WO-A1-2017/036510
- WO-A1-2017/148531
- WO-A1-2017/198302
- SE-A1- 1 550 428
- US-A1- 2017 293 296
- US-A1- 2018 053 410

## Description

### 1. Domaine de l'invention

La demande d'invention se situe dans le domaine des réseaux de communications pour les services aux véhicules et plus spécifiquement dans les techniques mises en oeuvre pour la coordination de véhicules se déplaçant au sein de convois.

### 2. Etat de la technique antérieure

Les techniques de communications sont de plus en plus envisagées dans le domaine des réseaux véhiculaires. Ainsi, les véhicules sans chauffeur et les mécanismes permettant d'améliorer la fluidité du trafic et la sécurité des usagers font l'objet de communications et d'études de services de communications adaptés à ce contexte.

Dans ce contexte de rapprochement des services de communications avec les déplacements de véhicules, la formation de convois de véhicules est de plus en plus envisagée dans le domaine routier pour différentes raisons parmi lesquelles :
- Gain en énergie « global » par effet d'aspiration
- Fluidification du trafic en évitant les effets de ralentissement et d'accélération
- Sécurisation en évitant les carambolages
- Augmentation du flux de trafic admissible par voie

La formation de convois ne s'envisage que dans la mesure où les véhicules formant le convoi acquièrent une certaine autonomie par rapport au conducteur, notamment pour l'asservissement du freinage et de l'accélération des véhicules. Les technologies de communication s'avèrent donc particulièrement utiles pour la mise en oeuvre de convois notamment pour assurer la coordination des véhicules dans un convoi.

La performance de freinage de véhicules sous conduite autonome (sans chauffeur) s'avère plus performante que celle de véhicules avec chauffeur. Ceci s'explique par le temps additionnel par rapport à un système autonome de réaction de l'être humain et de captation de l'information précédant le freinage. Ce temps de captation est évalué entre 1 et 2 secondes quand le temps d'évaluation de la situation par un véhicule autonome est inférieur à une seconde. Le temps de mise en efficacité des freins est quasiment équivalent entre un véhicule autonome et un véhicule conduit par une personne.

Dans le contexte de convois, le freinage d'urgence revêt une grande importance, afin d'éviter les accidents en série. Les systèmes couramment utilisés, tels que les systèmes radar ou lidar, pour détecter le moment exact où un véhicule précédant commence son processus de freinage ne répondent pas au besoin de gérer rapidement une situation d'urgence. Ainsi, lorsqu'un véhicule du convoi commence à freiner, le véhicule suivant du convoi doit détecter l'utilisation du système de freinage du véhicule précédent ainsi que la force du freinage mise en oeuvre (fonction de la proximité du danger), pour que lui aussi débute sa phase de freinage. Le temps de décalage entre le début du freinage du premier véhicule et le début du freinage du véhicule suivant du convoi est égal au temps de mise en action des freins auquel on ajoute le temps de détection au niveau du véhicule suivant. Plus ce temps est long, plus les risques d'accident sont élevés et plus il faut augmenter la distance entre les véhicules d'un convoi, au détriment du nombre de véhicules qu'il est possible d'insérer dans un convoi sur une distance donnée.

Les techniques ITS (en anglais « Intelligent Transport Systems »), proposent des systèmes de transmission de messages par ondes hertziennes entre véhicules et peuvent être intéressantes pour améliorer le freinage des véhicules se succédant dans un convoi. Le véhicule en freinage d'urgence dans un convoi peut ainsi transmettre une information à caractère d'urgence au véhicule le suivant. La transmission d'un message à destination du véhicule suivant est plus rapide que la détection du freinage par le véhicule suivant. A ces fins de transmission de messages, l'organisme ETSI (en
anglais « European Telecommunications Systems Interconnection ») a spécifié des messages de type CAM (en anglais « Cooperative Awareness Message ») dans le document ETSI EN 302 637-2 (V1.3.2 - 2014-11) et de type DENM (en anglais « Decentralized Environmental Notification Message ») dans le document ETSI EN 302 637-3 (V1.2.2 - 2014-11).

Les techniques ITS pour les communications de véhicule à véhicule sont le plus souvent utilisées pour les communications entre 2 véhicules et sont en outre limitées à la portée des ondes radio entre les véhicules. Il en résulte que l'information de freinage d'un véhicule peut être transmise au véhicule qui suit avec une meilleure performance que si le deuxième véhicule devait détecter lui-même le freinage du véhicule le précédant mais il ne peut être transmis à l'ensemble des véhicules du convoi en parallèle. Le message peut être transmis de véhicule à véhicule mais cela introduit un délai de propagation non compatible avec l'exigence de freinage. La demande de brevet US 2016/ 0054735 A1 et la demande de brevet WO 2016134770 A1 proposent des solutions de propagation d'information pour gérer la distance inter-véhiculaire mais ne divulguent pas de solution pour gérer un freinage ou une information d'accélération pour un ensemble de véhicules d'un convoi.

Le document US 2018/0053410 A1 décrit un système de gestion de véhicules comprenant un contrôleur de trafic qui détecte un paramètre d'état du trafic pour une première voie et suite à cette détection, le contrôleur diffuse une valeur de mouvement pour un premier groupe de véhicules sur la première voie.

Le document WO 2017/148531 A1 décrit une méthode ainsi qu'une entité de contrôle de trafic pour le contrôle d'un groupe de véhicules autonomes permettant à un véhicule d'urgence s'approchant de l'arrière de ce groupe de pouvoir se déplacer et dépasser sans trop ralentir sur un passage laissé libre suite au déplacement latéral du groupe de véhicules.

Le document WO 2017/036510 A1 décrit une méthode et un dispositif pour la configuration de communications radio dans un contexte de gestion de trafic routier à partir de communications radio. La méthode comprend notamment la détection de conditions de trafic dans une zone prédéterminée et la transmission d'une instruction de configuration d'au moins un paramètre relatif à la communication radio.

Le document WO 2017/198302 A1 est relatif à une méthode de propagation d'un message émis par un terminal sans fil à un groupe de terminaux sans fils. La méthode porte sur la détermination d'une portée par le premier terminal du groupe et sur l'émission par ce premier terminal d'un message vers les autres terminaux du groupe en utilisant une puissance de transmission correspondant à la portée.

Le document US 2017/293296 A1 décrit une méthode pour grouper un ensemble de véhicules dans un peloton ainsi que l'utilisation de données de navigation et d'autres données pour optimiser l'efficacité de la gestion des véhicules formant le peloton.

Le document SE 1 550 428 A1 décrit une méthode, un équipement et ur système permettant d'assister un conducteur d'un premier véhicule pour la formation d'un peloton avec un deuxième véhicule et de faire varier la vitesse du premier et/ou du deuxième véhicule pour respecter une distance entre les deux véhicules du peloton.

Un des buts de la présente invention est de remédier aux insuffisances/inconvénients de l'état de la technique discutés ci-dessus et/ou d'y apporter des améliorations.

### 3. Exposé de l'invention

L'invention vient améliorer la situation à l'aide d'un procédé selon la revendication 1.

Les véhicules appartenant à un ensemble de véhicules autonomes formant un convoi doivent se déplacer sur un itinéraire en tenant compte de la vitesse et des freinages ou accélérations des autres véhicules. Leur progression doit donc être coordonnée. L'itinéraire peut être sur une voie routière ou sur toute autre infrastructure utilisée pour se déplacer suivant tout type de trajectoire, rectiligne ou courbe. Les communications inter-véhiculaires, mises en oeuvre dans les techniques relevant de l'art antérieur, sont limitées d'une part par le fait qu'un véhicule communique généralement avec seulement une partie des véhicules du convoi, en raison de la limite de portée radio ou bien parce que les protocoles de communications ne sont pas prévus pour comprendre des informations émises par un véhicule vers un ensemble défini de véhicules, tel qu'un convoi.

A partir d'une information d'événement reçue, par exemple d'un des véhicules, l'entité de gestion, ou serveur, peut avantageusement informer de façon simultanée tous les autres véhicules du convoi, améliorant la rapidité de diffusion de l'information. L'invention permet en outre de ne pas systématiquement diffuser l'information à tous les véhicules mais de sélectionner seulement les véhicules cibles, c'est-à-dire possiblement impactés ou concernés par l'information d'événement reçue, par exemple en fonction du véhicule ayant transmis l'information ou bien en fonction de l'information elle-même. Dans un convoi, un ou plusieurs véhicules cibles sont potentiellement concernés par un événement se produisant sur un itinéraire. Ces véhicules, une fois déterminés, devront mettre en oeuvre une action pour répondre à l'événement se produisant. L'entité de gestion, à partir de l'information reçue, doit identifier les véhicules du convoi qui seront concernés pas l'information et déterminer l'instruction de régulation à transmettre (freinage, accélération, arrêt...). Par défaut, elle peut identifier tous les véhicules ou par exemple seulement une partie des véhicules. Le type d'information d'évènement, l'émetteur de l'information pourront influer sur les véhicules concernés. Ce procédé permet donc de raccourcir le délai de propagation d'un événement se produisant sur le passage d'un convoi de véhicules, ou dans le convoi de véhicules lui-même, mais aussi d'améliorer la portée de diffusion de l'information. L'entité de gestion de l'infrastructure peut en effet transmettre le message comprenant l'instruction de régulation à un ensemble de véhicules en utilisant le réseau de l'opérateur, de large portée, alors que la transmission directe, sans intervention du serveur de l'opérateur, d'un véhicule à un autre est limitée en portée et réduit donc la possibilité de transmission rapide du message comprenant l'instruction de régulation à un ensemble de véhicules. L'utilisation d'une entité de gestion pour informer un ensemble de véhicules permet en outre de pouvoir interférer avec des conditions en provenance d'autres serveurs pour compléter et affiner l'instruction de régulation transmise.

L'entité de gestion peut être gérée par un opérateur de télécommunications ou par tout autre type d'opérateur (infrastructure routière, gestionnaire d'autoroute, rails, ville...).

Par exemple, la connaissance de conditions météorologiques sur une zone donnée peut être utilisée pour transmettre une instruction de régulation plus adaptée au contexte de déplacement du convoi formé par l'ensemble de véhicules. Une entité de gestion d'un autre convoi peut transmettre une information importante (arrêt, panne,...) sur son convoi à l'entité de gestion en charge de l'ensemble. Un gestionnaire d'infrastructure routière peut transmettre une information sur des travaux en cours ou un accident qui s'est produit sur une infrastructure. Un service de police peut informer l'entité de gestion sur des incidents en cours dans une ville par exemple.

Selon l'invention, dans le procédé d'adaptation, l'information d'événement est obtenue d'un véhicule de l'ensemble.

Le procédé peut avantageusement être mis en oeuvre lorsqu'un véhicule, notamment lorsque le véhicule en tête de l'ensemble est par exemple obligé de freiner de façon subite et que les autres véhicules de l'ensemble doivent adapter leur comportement au comportement du premier véhicule. La transmission de l'instruction de régulation, émise par le serveur à partir de l'information reçue du véhicule devant freiner permet ainsi d'éviter les accidents et d'éviter de remettre en cause la coordination du déplacement des véhicules.

Selon un autre aspect de l'invention, dans le procédé d'adaptation, l'information d'événement obtenue est relative au freinage dudit véhicule de l'ensemble.

Le procédé est notamment nécessaire en cas de freinage du véhicule. L'information sur le freinage appliqué par le véhicule doit être transmise avec célérité à l'ensemble des véhicules suivant le véhicule devant freiner. Il est aussi crucial que le freinage des véhicules suivant le véhicule soit réalisé de façon coordonnée, c'est-à-dire que chaque véhicule de l'ensemble freine au même moment et avec une même intensité.

Selon un autre aspect de l'invention, dans le procédé d'adaptation, l'information d'événement obtenue par l'entité de gestion est également reçue par le véhicule suivant le véhicule, émetteur de l'information d'événement, dans l'ensemble.

Pour ce qui concerne la vitesse de propagation de l'instruction de régulation à l'ensemble des véhicules, la première itération de transmission de l'information d'un véhicule au véhicule qui le suit peut être plus efficace que la transmission de l'information par l'intermédiaire d'un serveur. La transmission de l'information par le premier véhicule au véhicule le suivant en parallèle à l'envoi de l'information au serveur permet de sélectionner la meilleure approche pour la transmission de l'information aux différents véhicules. Cela permet donc de limiter le délai de propagation de l'information pour chaque véhicule de l'ensemble en choisissant l'option de propagation la plus adaptée.

Selon un autre aspect de l'invention, dans le procédé d'adaptation, l'information d'événement est obtenue d'un dispositif déployé sur l'itinéraire.

L'interaction entre les dispositifs se trouvant sur le parcours et le convoi de véhicules est intéressante pour réguler au mieux le trafic et la progression des convois. Des dispositifs, tels que des feux tricolores et des panneaux lumineux d'avertissement, peuvent transmettre des informations à l'entité pour éviter les freinages intempestifs voire les accidents.

Selon un autre aspect de l'invention, dans le procédé d'adaptation, l'instruction de régulation est une consigne de freinage de l'au moins un véhicule cible.

La bonne coordination de l'ensemble de véhicules peut être mise en défaut notamment dans le cas où un freinage d'urgence doit être opéré par les différents véhicules du groupement. En effet, en cas de retard dans la transmission et la prise en compte de l'instruction de régulation, cela peut conduire à des effets d'accordéon voire à des accidents en série. L'instruction de régulation correspondant à une consigne de freinage est donc indispensable à la mise en oeuvre de groupements de véhicules formant un convoi.

Selon un autre aspect de l'invention, dans le procédé d'adaptation, l'instruction de régulation comprend en outre une donnée d'intensité du freinage.

La consigne de freinage peut, selon une alternative, comprendre une valeur d'intensité de freinage. Une seule consigne, sans valeur d'intensité, peut conduire à des intensités de freinage différents et donc à des accidents. L'intensité de freinage peut en outre être adaptée en fonction du type de véhicule. Pour une consigne de freinage donnée, la valeur d'intensité transmise si un peloton comprend au moins un véhicule lourd de type camion et l'intensité de freinage transmise si un peloton comprend uniquement des véhicules légers pourraient être différentes, selon le mode de mise en oeuvre.

Selon l'invention, le procédé d'adaptation comprend en outre l'émission d'un message de notification comprenant l'instruction de régulation à une deuxième entité de gestion d'une infrastructure de télécommunications.

L'instruction de régulation est avantageusement transmise à une autre entité de gestion pour coordonner le freinage de convois distincts, par exemple gérés par des entités différentes. Les véhicules de convois d'une zone géographique donnée, devant freiner de façon coordonnée, peuvent ainsi être informés du freinage de différents convois et éviter ainsi les accidents entre convois.

Selon un autre aspect de l'invention, le procédé d'adaptation comprend en outre la réception en provenance de l'au moins un véhicule cible d'un message d'acquittement comprenant un paramètre relatif à la vitesse actualisée de l'au moins un véhicule cible.

L'entité utilise l'information transmise par le véhicule pour adapter, en cas de besoin, les instructions transmises aux véhicules de l'ensemble. Par exemple, si le véhicule n'adapte pas sa vitesse conformément à l'instruction de régulation reçue, par exemple en raison des conditions météorologiques (s'il y a un problème d'adhérence par exemple), l'entité peut alors émettre une nouvelle instruction de régulation prenant en compte le message d'acquittement reçu.

Selon un autre aspect de l'invention, dans le procédé d'adaptation, l'instruction de régulation est émise à destination de l'au moins un véhicule cible en utilisant un mode d'émission de type multicast.

L'émission du message comprenant l'instruction de régulation à un ensemble de véhicules d'un ensemble peut avantageusement utiliser le mode de transmission multicast. Un identifiant du groupement peut avantageusement être utilisé pour déterminer le groupe multicast à qui le message doit être transmis. Dans le cas où plusieurs groupements sont impactés par un événement et doivent recevoir une même instruction de régulation, un domaine multicast plus large couvrant par exemple une zone géographique peut être utilisé.

Selon un autre aspect de l'invention, dans le procédé d'adaptation, la détermination de l'instruction de régulation est relative à une donnée obtenue d'un véhicule d'un autre ensemble.

La coordination entre les ensembles de véhicules est aussi particulièrement importante. Il est nécessaire notamment de s'assurer qu'une distance suffisante est maintenue entre deux ensembles pour éviter des problèmes en série sur plusieurs ensembles. Dans le cas d'ensembles gérés par une même entité, ou si une entité assure la coordination des ensembles pour une zone géographique donnée, des véhicules d'autres ensembles, peuvent transmettre des indications à l'entité que celle-ci peut exploiter pour la détermination de l'instruction.

Les différents aspects du procédé d'adaptation qui viennent d'être décrits peuvent être mis en oeuvre indépendamment les uns des autres ou en combinaison les uns avec les autres.

L'invention concerne également un dispositif selon la revendication 10.

Ce dispositif, apte à mettre en oeuvre dans tous ses modes de réalisation le procédé d'adaptation qui vient d'être décrit, est destiné à être mis en oeuvre dans un une entité de gestion d'un réseau de communications.

L'invention concerne aussi un système selon la revendication 11.

L'invention concerne aussi un programme d'ordinateur comprenant des instructions pour la mise en oeuvre des étapes du procédé d'adaptation qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue simplifiée du freinage d'un convoi selon une technique antérieure,
- la figure 2 présente une vue simplifiée du procédé d'adaptation selon un aspect de l'invention,
- la figure 3 présente un aperçu du procédé d'adaptation selon un premier mode de réalisation de l'invention,
- la figure 4 présente un aperçu du procédé d'adaptation selon un deuxième mode de réalisation de l'invention,
- la figure 5 présente un exemple de structure d'un dispositif d'adaptation selon un aspect de l'invention.

### 5. Description détaillée d'au moins un mode de réalisation de l'invention

Dans la suite de la description, on présente des exemples de plusieurs modes de réalisation de l'invention dans une infrastructure de communication mobile de type cellulaire (3G, 4G, 5G) mais l'invention peut également être mise en oeuvre dans d'autres types d'infrastructure de communications sans fils (Wi-Fi adapté au domaine automobile notamment : spécifications 802.11p notamment). Dans le document, les termes « ensemble » pour indiquer un ensemble de véhicules ou « convoi » seront indifféremment utilisés pour désigner les véhicules se déplaçant de façon coordonnée sur un même itinéraire, c'est à dire suivant un même trajet et une même trajectoire . Les différents véhicules de l'ensemble ou convoi ont donc des vitesses équivalentes pour assurer le déplacement coordonné des véhicules.

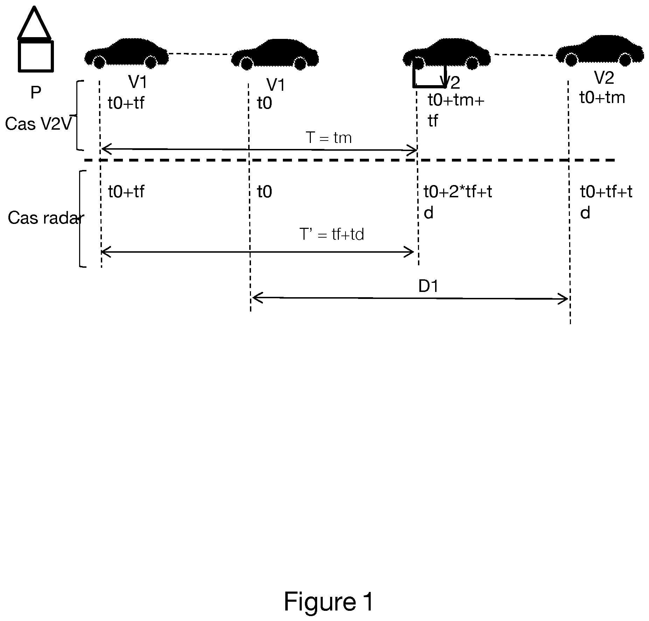

On se réfère tout d'abord à la **figure 1** qui présente une vue simplifiée du freinage d'un convoi selon une technique de l'art antérieur. On considère dans cette figure 1 que les véhicules V1 et V2 roulent en convoi, c'est-à-dire que chaque véhicule roule à la même vitesse ou à une vitesse très proche, sur une même voie et dans la même direction. Deux véhicules sont représentés sur la figure 1 mais le convoi peut comprendre un nombre plus important de véhicules. Les véhicules peuvent être des motos, des voitures ou des camions et il est considéré que les véhicules disposent d'une certaine autonomie, c'est-à-dire que les commandes de freinage, d'accélération, de changement de direction sont assurées de façon automatique, sans intervention d'un conducteur.

On se place selon cet exemple dans la situation où le véhicule V1 doit freiner d'urgence par exemple, pour ne pas avoir de collision avec l'obstacle P sur la voie. A l'instant t0, le véhicule V1 commence à mettre en action ses freins et commence à décélérer à t0 + tf, tf représentant la durée pendant laquelle le véhicule ne décélère pas encore.

Quel que soit le système utilisé, radar, lidar, ou par envoi de message direct entre véhicules d'un véhicule à l'autre, il existe une latence entrainant un décalage temporel entre les débuts de décélération (resp. accélération) des deux véhicules.

Les deux véhicules V1 et V2 sont espacés d'une distance D1 à t0 qui correspond à la distance de sécurité.

Dans le cas d'utilisation de message d'alerte véhiculé par voie hertzienne, c'est-à-dire de véhicule à véhicule (cas V2V sur la figure 1), le véhicule V1 peut ne pas être autonome mais il transmet néanmoins directement une information de freinage au véhicule V2 qui doit freiner en réaction au freinage du véhicule V1. Le véhicule V1 transmet l'information de début de freinage au véhicule V2 avant sa phase de décélération à proprement dite. Il se produit néanmoins un décalage dans le début de freinage des deux véhicules. Ce décalage est égal à une valeur T= tm où tm représente le temps de latence du système d'envoi/réception de message.

Aujourd'hui, des systèmes de type radar ou lidar sont utilisés pour assurer la détection par le véhicule V2 du freinage du véhicule V1. Des informations sur les systèmes radar ou lidar peuvent être obtenus à partir des documents suivants (Heterogeneous Fusion of Video, LIDAR and ESP Data for Automotive ACC Vehicle Tracking, IEEE, International Conférence on Multisensor Fusion and intégration for Intelligent Systems, 26 décembre 2006 et Advances in Radio Science, Automotive Radar and Lidar Systems for Next Génération Driver, Assistance Functions, 12 mai 2005).

Selon le cas radar sur la figure 1, le véhicule V1 met en oeuvre son système de freinage et le véhicule V2 détecte que le véhicule V1 freine lorsque la décélération du véhicule V1 est effective, et seulement ensuite le véhicule V2 met à son tour son système de freinage en action. Il se produit donc un décalage entre le début de freinage des deux véhicules comme dans l'exemple précédent. Ce décalage est égal à une valeur T'= tf+td où td représente le temps de latence du système par détection Lidar/radar et tf représentant la durée pendant laquelle le véhicule ne décélère pas encore après avoir actionné ses freins.

Dans les deux cas, il convient donc que les deux véhicules V1 et V2 soient distants d'une distance D1 au moins égale à la distance relative couverte par le véhicule V2 rattrapant le véhicule V1 pendant le temps T ou T', selon l'exemple choisi (V2V ou radar).

Il est d'ailleurs possible que le différentiel de vitesse entre les deux véhicules V1 et v2 subsiste jusqu'à l'arrêt complet du véhicule V1. Cela peut être le cas dans un freinage d'urgence dans le cas où les capacités de freinage du véhicule V1 sont supérieures à celle de V2. Le véhicule V2 doit en outre déterminer la valeur de la décélération du véhicule V1 pour pouvoir lui-même adapter sa décélération à celle du véhicule le précédant. La distance entre véhicule dans le convoi doit être suffisamment grande pour éviter les collisions en situation de freinage d'urgence. Les techniques relevant des ITS (en anglais Intelligent Transport Systems) et notamment les communications dites V2V (en anglais Vehicle-to-Vehicle) paraissent adaptés au cas d'usage du freinage de deux véhicules. Des messages de type CAM (en anglais Cooperative Awareness Message) spécifié dans le document ETSI EN 302 637-2 (V1.3.2 - 2014-11) (Intelligent Transport Systems (ITS); Vehicular Communications; Basic Set of Applications; Part 2: Spécification of Cooperative Awareness Basic Service) ou DEMN (en anglais Decentralized Environmental Notification Message) spécifié dans le document ETSI EN 302 637-3 (V1.2.2 - 2014-11) (Intelligent Transport Systems (ITS); Vehicular Communications; Basic Set of Applications; Part 3: Spécifications of Decentralized Environmental Notification Basic Service) échangés sur une infrastructure sans fils directement de véhicule à véhicule, par exemple par les ondes hertziennes, peuvent être utilisés pour transmettre les informations de freinage avec des extensions éventuelles.

Si l'on considère que le temps tm correspond au temps de réception et de traitement d'un message de freinage par le véhicule V2, alors il faut que tm soit inférieur à tf+td pour que ce type de solution soit intéressant.

S'il est possible d'envisager tm<tf+td pour deux véhicules, il est probable que pour un convoi comprenant plus de deux véhicules, ce qui est l'objectif de l'organisation de convois, ce type de solution V2V ne sera pas une solution optimale. En effet, le véhicule. V2, une fois qu'il a reçu et traité le message de freinage en provenance du véhicule V1 doit le transmettre au véhicule suivant ou transmettre un nouveau message informant de son propre freinage, avec un nouveau temps de latence.

Le véhicule suivant peut alors devoir freiner plus puissamment que le véhicule précédent pour compenser le temps de latence. Ceci est particulièrement le cas pour un freinage d'urgence par exemple si la distance D est inférieur à un certain seuil que l'on peut déterminer à priori. Pour un véhicule du convoi, il sera alors impossible de freiner aussi intensément que nécessaire et un accident se produira. Pour un freinage normal, le point est moins critique s'il peut y avoir anticipation par rapport à l'obstacle. Les techniques V2V, utilisées de véhicule à véhicule, sont donc non optimales, voire non adaptées, pour le freinage de convoi de véhicules. Le message du véhicule V1 étant transmis de proche en proche, des temps de latence s'ajoutent au fur et à mesure de la transmission aux véhicules du convoi et la limite en portée des communications V2V ne permettent pas au véhicule V1 de transmettre son information de freinage simultanément à l'ensemble de véhicules du convoi.

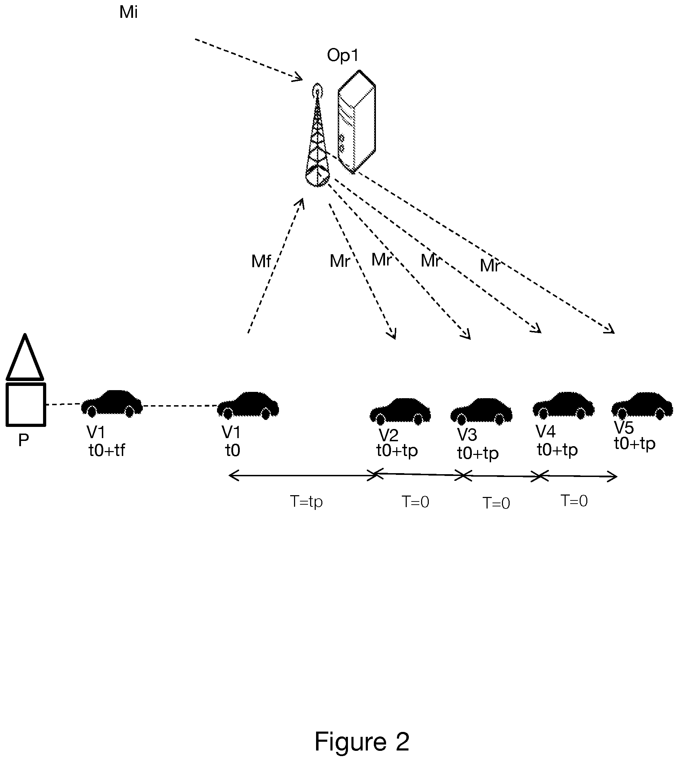

En relation avec la **figure 2**, on présente un procédé d'adaptation selon un aspect de l'invention.

Le convoi de véhicules est composé de cinq véhicules V1, V2, V3, V4 et V5. Comme sur la figure 1, le véhicule V1 doit freiner de façon intensive en raison d'un obstacle P sur sa voie. Le temps représentant la durée pendant laquelle le véhicule V1 ne décélère pas encore après avoir actionné ses freins ne varie pas par rapport à la figure 1 et représente un temps tf. A la différence de la figure 1, selon un exemple, le véhicule V1 ne transmet pas de message relatif à son freinage au véhicule qui le suit, à savoir le véhicule V2. Selon un autre exemple, le véhicule V1 peut transmettre un message relatif à son freinage au véhicule qui le suit.

Le véhicule V1 transmet une information d'événement, correspondant à un message de freinage Mf à une entité de gestion d'un réseau d'opérateur, ou plate-forme de services. Le véhicule peut joindre l'entité de gestion car l'adresse lui a été communiquée lors de sa souscription au service de gestion des convois, ou bien parce que l'adresse de l'entité est propre au véhicule ou bien encore parce qu'elle lui a été communiquée lors de son adhésion au convoi de véhicules. A la réception du message Mf, l'entité de gestion détermine le convoi auquel appartient le véhicule V1, par exemple à partir d'un identifiant transmis par le véhicule V1 ou par identification de l'abonnement auquel a souscrit le véhicule V1 par l'intermédiaire de son propriétaire, et identifie les véhicules cibles appartenant au convoi et devant être informés du freinage intensif du véhicule V1. Le message Mf peut comprendre une information sur l'intensité du freinage du véhicule V1. A partir de l'information d'événement et des paramètres présents dans le message Mf, l'entité de gestion transmet un message Mr de recommandation de freinage avec possiblement une valeur d'intensité de freinage à tous les véhicules possiblement impactés, ou véhicules cibles, donc suivant le véhicule V1 dans le convoi. Le message Mr peut être transmis en mode unicast, avec un message par véhicule destinataire, en mode multicast en associant une adresse multicast au convoi, ou en utilisant une adresse broadcast pour l'ensemble des véhicules V2, V3, V4, V5 du convoi. Il est également possible d'envoyer pratiquement en parallèle plusieurs messages en tirant partie de possibilité de multiplexage au niveau de l'accès radio. L'envoi du message Mr de façon simultanée (ou quasi simultanée) aux véhicules cibles V2, V3, V4, V5 permet ainsi de coordonner le freinage des véhicules du convoi. Le temps de transmission du message de freinage Mf du véhicule V1 vers l'entité de gestion ajouté au temps de transmission du message Mr de l'entité de gestion aux véhicules V2, V3, V4, V5 représente un temps tp. Le temps tp, selon les protocoles de communication et les architectures de réseaux utilisées, pourra être supérieur au temps tm de la figure 1 (temps de décalage entre le premier véhicule V1 et le deuxième véhicule V2) pour le véhicule 2, mais pour tous les autres véhicules du convoi, le temps tp identique pour tous les véhicules, est inférieur aux temps de décalage que l'on peut estimer à n*tm pour les véhicules Vn avec n supérieur à 2 (temps tm du message transmis de proche en proche du véhicule V1 au véhicule V2, puis de V2 à V3, puis de V3 à V4, etc...). Selon le procédé d'adaptation mis en oeuvre, il peut être envisagé d'organiser des convois avec des distances entre les véhicules V2, V3, V4 réduites (théoriquement nulles) puisque chaque véhicule est averti de façon synchrone des informations de freinage et peut donc freiner en même temps que les véhicules le précédant. Seul le véhicule V2 doit être suffisamment éloigné du véhicule V1 pour prendre en compte le temps de transmission tp. En outre, le recours à l'entité de gestion permet de pouvoir informer les véhicules alors même que les véhicules n'ont pas détecté de problèmes, notamment si un problème n'a pas été détecté par un véhicule du convoi mais par un autre dispositif. Par exemple, l'entité de gestion, en relation avec des systèmes de prévisions météorologiques ou bien avec des systèmes de gestion de l'infrastructure de voiries, voire avec des entités de gestion d'autres convois, peut obtenir des messages d'information Mi d'autres entités ou dispositifs positionnés sur l'itinéraire du convoi par exemple et transmettre une instruction de régulation aux véhicules cibles V1, V2, V3, V4, V5 du convoi. Ceux-ci pourront ainsi anticiper d'éventuels problèmes pouvant survenir sur la voirie et éviter ainsi les freinages d'urgence. Le recours à un réseau d'opérateur permet donc d'assurer la fiabilité et la disponibilité du service, la coordination des actions de freinage entre les véhicules d'un convoi et l'interfaçage avec d'autres acteurs et fournisseurs de services.

Il est à noter que les exemples donnés dans les figures 1 et 2 concernent des freinages mais les architectures mises en oeuvre sont également valides pour des phases d'accélération; la différence étant que la criticité des actions et la nécessaire coordination est moins cruciale pour une phase d'accélération.

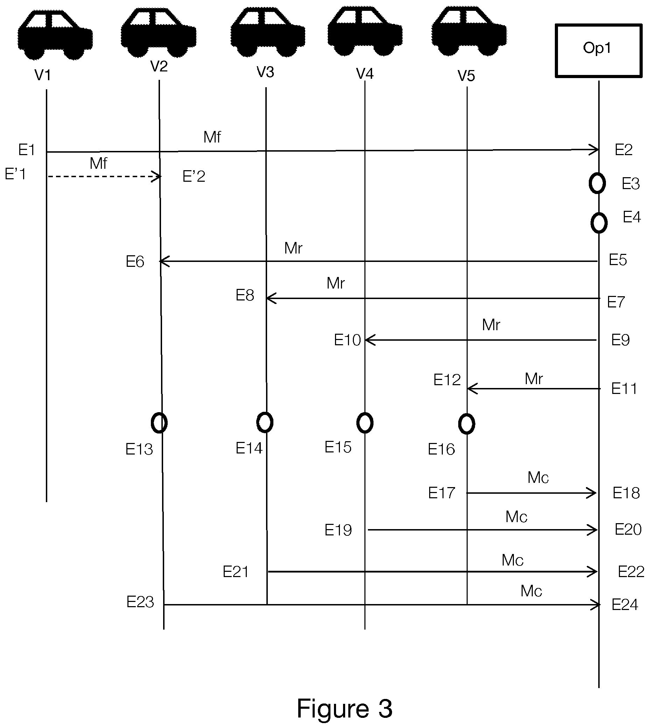

On se réfère maintenant à la **figure 3** qui présente un aperçu du procédé d'adaptation selon un premier mode de réalisation de l'invention.

Il est considéré dans ce mode de réalisation que 5 véhicules V1, V2, V3, V4, V5 font partie d'un convoi et le premier véhicule du convoi est le véhicule V1. La formation et la gestion du convoi ne sont pas développées dans ce mode de réalisation. Il est considéré que l'entité Op1 gérant le convoi connaît les véhicules V1 à V5 et sait dans quel ordre ils se trouvent dans le convoi.

A l'étape E1, le véhicule V1 transmet à l'entité Op1 un message Mf indiquant ainsi à l'entité Op1 qu'il effectue un freinage. Selon une alternative, le message Mf comprend en outre une valeur d'intensité de freinage. Le message Mf, selon une autre alternative, peut comprendre un indicateur d'urgence dans le cas par exemple où il s'agit d'un freinage d'urgence et/ou que l'intensité de freinage est très importante. A la réception du message Mf lors de l'étape E2, l'entité Op1 détermine l'origine du message Mf. L'entité Op1 peut par exemple utiliser l'adresse réseau utilisée par le véhicule V1 pour transmettre le message Mf ou bien un autre identifiant, tel qu'un identifiant de véhicule ou une adresse de véhicule associée à un identifiant de convoi, attestant de l'identité de l'émetteur du message Mf. Il est à préciser que les différents échanges entre les véhicules et l'entité Op1 peuvent avantageusement être sécurisés, par des mécanismes d'authentification et de chiffrement par exemple basés sur les protocoles IPSEC (en anglais Internet Protocole Security). Lors de l'étape E3, l'entité Op1 détermine ensuite les véhicules possiblement impactés ou cibles par l'information contenue dans le message Mf. Pour réaliser ceci, il peut par exemple utiliser une base de données contenant les différents convois gérés, les véhicules appartenant à chaque convoi et leur place dans les convois respectifs. Il peut également utiliser une cartographie voire des photos transmises par des caméras sur le parcours. A titre d'exemple, l'entité de gestion utilise une base de données par convoi répertoriant les différents véhicules et leur place dans le convoi, ainsi que possiblement leurs vitesses respectives. A partir du message Mf reçu et de la table par convoi, et notamment de l'adresse du véhicule V1 ou de l'identifiant du véhicule V1, il peut identifier les véhicules cibles à qui envoyer une instruction de régulation. S'agissant d'une information de freinage, les véhicules du convoi suivant le véhicule V1 doivent être ralentis.

Lors de l'étape E4, il détermine quelle action doit être communiquée aux véhicules déterminés. Selon une alternative, il détermine une valeur d'intensité de l'action à communiquer. Cette détermination est réalisée à partir de l'information d'événement Mf obtenue. Il peut également utiliser d'autres informations telles que l'entité envoyant l'information d'événement Mf pour déterminer l'instruction de régulation, dans le cas présent la consigne de freinage. Il détermine donc qu'une action de freinage avec une valeur d'intensité doit être transmise aux véhicules cibles V2, V3, V4, V5. Les messages Mr transmis par l'entité Op1 sont transmis en utilisant un mode unicast dans l'exemple de la figure 3 mais ils pourraient être transmis en mode multicast ou broadcast indifféremment. Le mode unicast permet de sélectionner les véhicules individuellement à qui sont envoyés l'information. Le mode multicast permet d'informer de façon unique un ensemble de véhicules identifiés par l'adresse multicast. Le mode broadcast permet d'informer tous les véhicules indifféremment par exemple pour communiquer à tous les véhicules une information générale.

Les messages Mr sont transmis aux étapes respectives E5, E7, E9, E11 et reçus par les véhicules V2, V3, V4, V5 respectivement aux étapes E6, E8, E10, E12. L'émission et la réception des messages Mr sont de préférence réalisées de façon quasi simultanée pour assurer la coordination du freinage des différents véhicules conformément aux messages Mr. Lors des étapes E13, E14, E15, E16, les véhicules respectifs V2, V3, V4, V5 actionnent le freinage. Selon un exemple où une intensité de freinage est incluse dans les messages Mr, les véhicules adaptent leur décélération en fonction de la valeur d'intensité reçue. Selon une alternative, les véhicules V2, V3, V4, V5 peuvent transmettre, lors des étapes respectives E17, E19, E21, E23 des messages Mc de confirmation à l'entité Op1 afin que celle-ci ait la confirmation du freinage de l'ensemble des véhicules concernés par le freinage du véhicule V1. A la réception de ces messages, lors des étapes E18, E20, E22, E24 l'entité Op1 sait que les consignes des messages Mr ont été prises en compte par les différents véhicules concernés et qu'il n'est pas nécessaire de renvoyer de nouveaux messages. Selon une alternative, les messages Mc peuvent comprendre une intensité de freinage, correspondant ou non à l'intensité de freinage indiquée dans les messages Mr de telle façon que l'entité Op1 puisse, si nécessaire, retransmettre un message Mr avec de nouvelles intensités pour augmenter l'intensité si nécessaire ou la réduire si possible.

Selon une alternative, le véhicule V1 peut également transmettre le message Mf au véhicule V2 qui le suit, voire à un véhicule qui le précède dans le cas où il accélère. Dans la suite de l'exemple, il est considéré que le message est transmis au véhicule qui le suit. Le véhicule V2, suivant directement le véhicule V1 et devant freiner subitement, obtient l'information du message Mr de l'entité Op1 trop tardivement et est susceptible de commencer son freinage trop tardivement. Le véhicule V1 peut avantageusement transmettre le message Mf au véhicule V2 au moment où elle l'envoie à l'entité Op1. La transmission du message Mf du véhicule V1 au véhicule V2 peut être réalisée en utilisant les techniques de transmission proposées dans le cadre des ITS, par exemple en utilisant des infrastructures sans fils de type Wi-Fi. Selon, cette alternative, les différents véhicules de l'ensemble disposent de l'information de freinage du véhicule V1 suffisamment rapidement tout en maintenant la coordination des freinages des véhicules de l'ensemble.

Selon un autre exemple, le message Mf émis par le véhicule V1 est transmis par un équipement de télécommunications, tels qu'un smartphone. En effet, les smartphones dont de plus en plus équipés de fonctions de type « accéléromètres ». Ils peuvent être utilisés pour obtenir les informations relatives au freinage ou à l'accélération d'un véhicule et transmettre ces informations à l'entité Op1.

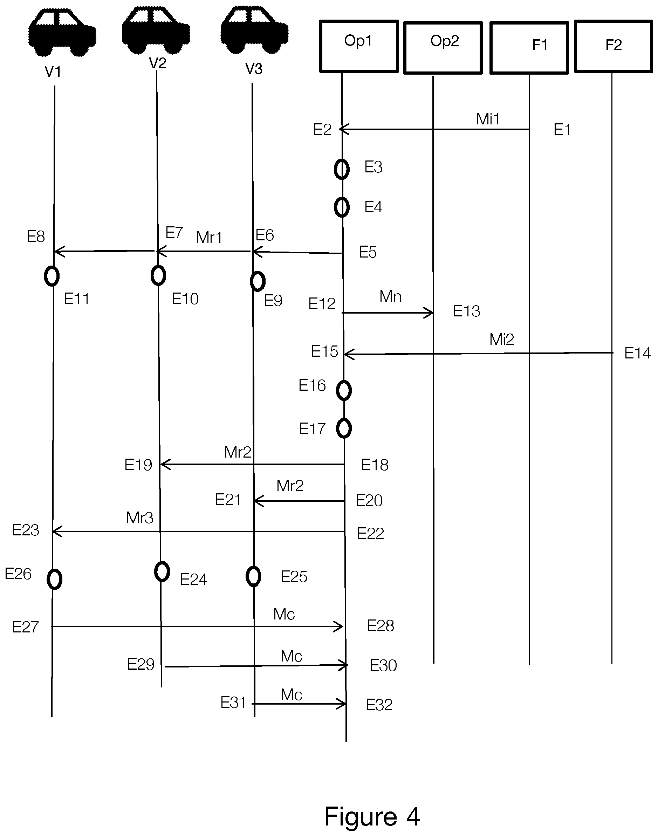

On se réfère maintenant à la **figure 4** qui présente un aperçu du procédé d'adaptation selon un deuxième mode de réalisation de l'invention. Dans ce mode de réalisation, trois véhicules V1, V2 et V3 forment un convoi. Ce convoi est géré par une entité Op1. Une entité Op2 gère au moins un autre convoi de véhicule. Dans ce mode de réalisation, une entité F1 qui est par exemple une plate-forme de services météorologiques et une entité F2 qui est par exemple un feu tricolore. Lors d'une étape E1, l'entité F1 transmet un message Mi1 indiquant des conditions météorologiques rendant difficile la circulation dans une zone géographique donnée, par exemple en raison de chutes de neige. A la réception du message Mi1 lors d'une étape E2, l'entité Op1 identifie les convois et les véhicules concernés par le message Mi1 lors d'une étape E3. Lors d'une étape E4, l'entité Op1 détermine l'action à communiquer aux véhicules des convois concernés. Lors de l'étape E5, l'entité Op1 transmet un message Mr1 multicast à destination des véhicules V1, V2, V3. L'adresse multicast utilisée correspond à une adresse multicast allouée au convoi, tous les véhicules du convoi étant impactés par le message Mi1 reçu. L'entité Op1 indique dans le message Mr à chaque véhicule V1, V2, V3 de ralentir de 20 km/h par exemple pour s'adapter aux conditions. Ce message Mr1 est reçu par les véhicules V1, V2, V3 lors des étapes E6, E7, E8 de façon quasi simultanée. Les véhicules V1, V2, V3 adaptent leur vitesse conformément au message Mr reçu lors des étapes E9, E10, E11. Cette adaptation est réalisée de façon quasi simultanée grâce au message Mr reçu de façon coordonnée. Ainsi les distances entre les véhicules du convoi restent quasiment identiques. Lors d'une étape E12, l'entité Op1 informe en outre, via un message Mn transmis à l'entité Op2 en charge de la gestion d'autres convois, de la recommandation transmise aux véhicules V1, V2, V3. Le choix des entités de gestion à informer est par exemple réalisé en fonction de la zone géographique des convois, dans le cas où les entités de gestion s'échangent les informations de localisation des convois qu'ils gèrent. A la réception du message Mn, l'entité Op2 informe les autres convois du ralentissement du convoi formé par les véhicules V1, V2, V3 pour maintenir une distance de sécurité suffisante entre les différents convois.

Lors de l'étape E14, le feu tricolore F2 transmet un message Mi2 à l'entité Op1 lui indiquant que le véhicule V1 est stoppé au feu. A la réception du message Mi2 lors de l'étape E15, l'entité Op1 identifie lors de l'étape E16 que les véhicules V2 et V3 précédant le véhicule V1 sont passés au feu tricolore et donc que le convoi se trouve dissocié, les véhicules V2 et V3 étant éloignés du véhicule V1 d'une distance qui est trop important pour un convoi. L'entité Op1 détermine une action lors de l'étape E17. Elle peut choisir d'associer le véhicule V1 à un autre convoi ou bien de le faire accélérer pour s'attacher de nouveau au convoi des véhicules V2 et V3. Elle détermine, lors de l'étape E17, l'action de faire ralentir les véhicules V2 et V3 pour que le véhicule V1 puisse de nouveau s'associer aux deux véhicules V2 et V3 pour reformer le convoi.

Selon une alternative, le message Mi2 peut provenir d'un véhicule appartenant à un autre ensemble de véhicules. Pour assurer la coordination des différents ensembles de véhicules, l'entité Op1 est susceptible de recevoir des informations de véhicules d'ensembles différents pour permettre une coordination entre ensembles. Des véhicules de chaque ensemble, par exemple le premier et le dernier, peuvent transmettre des informations, telles que leur vitesse et leur position, afin que l'entité Op1 puisse décider de faire accélérer ou ralentir les véhicules V1, V2, V3 de l'ensemble.

A l'étape E18 et à l'étape E20, l'entité Op1 transmet un message Mr2 de ralentissement au véhicule V2 et au véhicule V3, avec une certaine intensité de décélération en m/s². Ces messages sont transmis en mode unicast car ils sont transmis à quelques véhicules du convoi mais pas à l'ensemble. Ce message Mr2 est reçu respectivement par le véhicule V2 et le véhicule V3 aux étapes E19 et E21. L'entité Op1 transmet également lors de l'étape E22 un message Mr3 d'accélération, avec une intensité d'accélération, au véhicule V1. A la réception du message Mr3, le véhicule V1 accélère, dès qu'il lui est possible de franchir le feu tricolore. A l'étape E26, le véhicule V1 accélère conformément au message Mr3 reçu tandis que les véhicules V2 et V3 ralentissent conformément au message Mr2 qu'ils ont reçu. Les véhicules V1, V2, V3 transmettent ensuite, lors des étapes respectives E27, E29, E31, un message Mc à l'entité Op1 pour lui indiquer par exemple leurs vitesses respectives. L'entité Op1, à la réception de ces messages Mc lors des étapes E28, E30, E32 peut estimer le moment où le convoi sera sur le point de se reformer et qu'il devra transmettre des nouvelles consignes de vitesse aux différents véhicules pour que le convoi se déplace à nouveau de façon coordonnée.

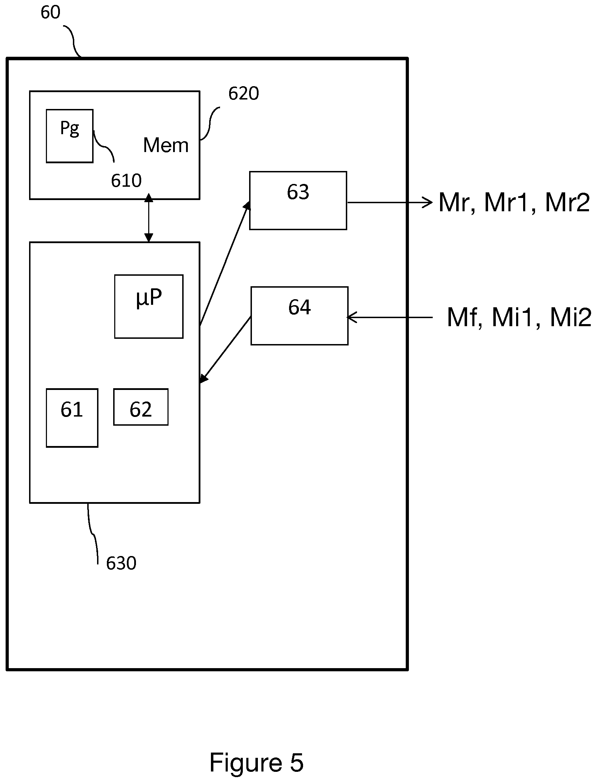

En relation avec la **figure 5**, on présente un exemple de structure d'un dispositif d'adaptation de la vitesse, selon un aspect de l'invention.

Le dispositif 60 d'adaptation met en oeuvre le procédé d'adaptation, dont différents modes de réalisation viennent d'être décrits.

Un tel dispositif 60 peut être mis en oeuvre dans une entité d'accès d'une infrastructure de télécommunications ou dans une entité de coeur de réseau ou bien encore dans une plate-forme de gestion de l'opérateur assurant la gestion de l'infrastructure.

Par exemple, le dispositif 60 comprend une unité de traitement 630, équipée par exemple d'un microprocesseur µP, et pilotée par un programme d'ordinateur 610, stocké dans une mémoire 620 et mettant en oeuvre le procédé d'adaptation selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- Un module d'obtention 64, apte à obtenir une information d'événement (Mf, Mi1, Mi2) relative à un événement intervenant sur l'itinéraire,
- Un module 61 d'identification, apte à identifier au moins un véhicule (V1, V2, V3, V4, V5) cible en fonction de l'information d'événement (Mf, Mi1, Mi2) obtenue,
- Un module 62 de détermination, apte à déterminer une instruction de régulation pour l'au moins un véhicule (V1, V2, V3, V4, V5) cible en fonction de l'information d'événement (Mf, Mi1, Mi2) obtenue,
- Un émetteur 63, apte à émettre à destination de l'au moins un véhicule (V1, V2, V3, V4, V5) cible de l'instruction de régulation (Mr, Mr1, Mr2)..

Le procédé d'adaptation de la vitesse a été décrit dans des exemples où les véhicules d'un convoi doivent accélérer ou freiner pour permettre que le convoi reste en place, c'est-à-dire que les distances entre les véhicules formant le convoi reste constantes, de façon a éviter les accidents et les ruptures de convoi, se produisant lorsqu'un véhicule est trop distant du véhicule le précédant et/ou le suivant. Le procédé peut également être mis avantageusement en oeuvre pour informer les véhicules d'un ensemble, ou convoi, d'une information sur l'itinéraire pour par exemple leur faire changer d'itinéraire de façon dynamique en fonction des contraintes sur l'itinéraire initial. Le procédé peut également être utilisé pour émettre des messages, par exemple publicitaires, aux passagers des véhicules autonomes. Ainsi, en fonction de la localisation géographique du convoi, et grâce à une information reçue puis retransmise par l'entité de gestion aux véhicules du convoi, le procédé d'adaptation peut s'enrichir d'informations diverses, propres à la régulation du trafic ou de façon plus large, pour des services enrichis proposés aux passagers des convois. Le procédé peut en outre s'avérer utile pour le déplacement des trains et la nécessaire régulation des différents trains entre eux, permettant ainsi d'augmenter le nombre de trains circulant en sécurité sur des voies ferrées.

## Revendications

1. Procédé d'adaptation de la vitesse d'au moins un véhicule (V1, V2, V3, V4, V5) appartenant à un premier ensemble d'au moins deux véhicules autonomes se déplaçant de façon coordonnée sur un itinéraire, comprenant les étapes suivantes mises en oeuvre dans une entité (Op1) de gestion d'une infrastructure de télécommunications apte à transmettre un message à l'au moins un véhicule:
- Obtention d'une information d'événement (Mf) en provenance d'un véhicule (V1) du premier ensemble et relative à un événement intervenant sur ledit itinéraire, ladite information comprenant un identifiant du véhicule (V1) associé à un identifiant du premier ensemble,
- Identification d'au moins un véhicule (V1, V2, V3, V4, V5) cible et au moins un deuxième ensemble de véhicules en fonction du véhicule émetteur déterminé à partir de l'identifiant du véhicule émetteur de l'information d'événement obtenue,
- Détermination d'une instruction d'adaptation de la vitesse de l'au moins un véhicule (V1, V2, V3, V4, V5) cible en fonction de l'information d'événement obtenue,
- Emission à destination de l'au moins un véhicule (V1, V2, V3, V4, V5) identifié et à une deuxième entité (Op2) de gestion d'une infrastructure de télécommunications en charge de l'au moins un deuxième ensemble de ladite instruction d'adaptation de la vitesse (Mr, Mr1, Mr2) de l'au moins un véhicule (V1, V2, V3, V4, V5) cible.

2. Procédé d'adaptation, selon la revendication 1, où l'information d'événement (Mf) obtenue est relative au freinage dudit véhicule (V1) du premier ensemble.

3. Procédé d'adaptation, selon la revendication 1 ou la revendication 2, où l'information d'événement (Mf) obtenue par l'entité de gestion est également reçue par le véhicule (V2) suivant le véhicule (V1), émetteur de l'information d'événement (Mf), dans le premier ensemble.

4. Procédé d'adaptation, selon l'une quelconque des revendications 1 à 3, où l'information d'événement (Mi2) est obtenue d'un dispositif (F1) déployé sur l'itinéraire.

5. Procédé d'adaptation, selon l'une quelconque des revendications 1 à 4, où l'instruction d'adaptation de la vitesse (Mr, Mr1, Mr2) est une consigne de freinage de l'au moins un véhicule (V1, V2, V3, V4, V5) cible.

6. Procédé d'adaptation, selon la revendication 5, où la consigne de freinage (Mr, Mr1, Mr2) comprend en outre une donnée d'intensité du freinage.

7. Procédé d'adaptation, selon l'une quelconque des revendications 1 à 6, comprenant en outre la réception en provenance de l'au moins un véhicule (V1, V2, V3, V4, V5) cible d'un message (Mc) d'acquittement comprenant un paramètre relatif à la vitesse actualisée de l'au moins un véhicule (V1, V2, V3, V4, V5) cible.

8. Procédé d'adaptation, selon l'une quelconque des revendications 1 à 7, où l'instruction d'adaptation de la vitesse (Mr, Mr1, Mr2) est émise à destination de l'au moins un véhicule (V1, V2, V3, V4, V5) cible en utilisant un mode d'émission de type multicast.

9. Procédé d'adaptation, selon l'une quelconque des revendications 1 à 8, où la détermination de l'instruction d'adaptation de la vitesse est relative à une donnée obtenue d'un véhicule d'un autre ensemble.

10. Dispositif d'adaptation de la vitesse d'au moins un véhicule (V1, V2, V3, V4, V5) appartenant à un premier ensemble d'au moins deux véhicules autonomes se déplaçant de façon coordonnée sur un itinéraire, mis en oeuvre dans une entité de gestion d'une infrastructure de télécommunications, apte à transmettre un message à l'au moins un véhicule, et comprenant :
- Un module d'obtention, apte à obtenir une information d'événement (Mf) en provenance d'un véhicule (V1) du premier ensemble et relative à un événement intervenant sur ledit itinéraire, ladite information comprenant un identifiant dudit véhicule (V1) associé à un identifiant du premier ensemble,
- Un module d'identification, apte à identifier au moins un véhicule (V1, V2, V3, V4, V5) cible et au moins un deuxième ensemble de véhicules en fonction du véhicule émetteur déterminé à partir de l'identifiant du véhicule émetteur de l'information d'événement obtenue,
- Un module de détermination apte à déterminer une instruction d'adaptation de la vitesse de l'au moins un véhicule (V1, V2, V3, V4, V5) cible en fonction de l'information d'événement obtenue,
- Un émetteur, apte à émettre à destination de l'au moins un véhicule (V1, V2, V3, V4, V5) identifié, et à une deuxième entité (Op2) de gestion d'une infrastructure de télécommunications en charge de l'au moins un deuxième ensemble identifié, de ladite instruction d'adaptation de la vitesse (Mr, Mr1, Mr2) de l'au moins un véhicule (V1, V2, V3, V4, V5) cible.

11. Système d'adaptation de la vitesse d'au moins un véhicule (V1, V2, V3, V4, V5) appartenant à un ensemble d'au moins deux véhicules autonomes se déplaçant de façon coordonnée sur un itinéraire, mis en oeuvre dans une entité de gestion d'une infrastructure de télécommunications, et comprenant :
- un dispositif d'adaptation selon la revendication 10,
- au moins un véhicule (V1, V2, V3, V4, V5) comprenant un récepteur d'une instruction (Mr, Mr1, Mr2) d'adaptation de la vitesse.

12. Système d'adaptation de la vitesse selon la revendication 11 comprenant en outre - un véhicule (V1, V2, V3, V4, V5) du premier ensemble, ledit véhicule comprenant un émetteur d'une information d'événement relative à un événement intervenant sur ledit itinéraire, ladite information comprenant un identifiant dudit véhicule (V1) associé à un identifiant du premier ensemble.

13. Programme d'ordinateur, **caractérisé en ce qu'**il comprend des instructions pour la mise en oeuvre des étapes du procédé d'adaptation selon la revendication 1, lorsque ce procédé est exécuté par un processeur.

14. Support d'enregistrement lisible par un dispositif d'adaptation conforme à la revendication 10, sur lequel est enregistré le programme selon la revendication 13.

## Patentansprüche

1. Verfahren zur Anpassung der Geschwindigkeit mindestens eines Fahrzeugs (V1, V2, V3, V4, V5), das zu einer ersten Einheit von mindestens zwei autonomen Fahrzeugen gehört, die sich koordiniert auf einer Strecke bewegen, das die folgenden Schritte enthält, die in einer Verwaltungsentität (Op1) einer Telekommunikationsinfrastruktur durchgeführt werden, die geeignet ist, eine Nachricht an das mindestens eine Fahrzeug zu übertragen:
- Erhalt einer Ereignisinformation (Mf) von einem Fahrzeug (V1) der ersten Einheit und bezüglich eines auf der Strecke stattfindenden Ereignisses, wobei die Information eine Kennung des Fahrzeugs (V1) enthält, die einer Kennung der ersten Einheit zugeordnet ist,
- Identifizierung mindestens eines Zielfahrzeugs (V1, V2, V3, V4, V5) und mindestens einer zweiten Einheit von Fahrzeugen abhängig vom bestimmten sendenden Fahrzeug ausgehend von der Kennung des die erhaltene Ereignisinformation sendenden Fahrzeugs,
- Bestimmung eines Anpassungsbefehls der Geschwindigkeit des mindestens einen Zielfahrzeugs (V1, V2, V3, V4, V5) abhängig von der erhaltenen Ereignisinformation,
- Senden an das mindestens eine identifizierte Fahrzeug (V1, V2, V3, V4, V5) und an eine zweite Verwaltungsentität (Op2) einer Telekommunikationsinfrastruktur, die für die mindestens eine zweite Einheit zuständig ist, des Anpassungsbefehls der Geschwindigkeit (Mr, Mr1, Mr2) des mindestens einen Zielfahrzeugs (V1, V2, V3, V4, V5) .

2. Anpassungsverfahren nach Anspruch 1, wobei die erhaltene Ereignisinformation (Mf) sich auf das Bremsen des Fahrzeugs (V1) der ersten Einheit bezieht.

3. Anpassungsverfahren nach Anspruch 1 oder Anspruch 2, wobei die von der Verwaltungsentität erhaltene Ereignisinformation (Mf) ebenfalls vom auf das die Ereignisinformation (Mf) sendende Fahrzeug (V1) folgenden Fahrzeug (V2) in der ersten Einheit empfangen wird.

4. Anpassungsverfahren nach einem der Ansprüche 1 bis 3, wobei die Ereignisinformation (Mi2) von einer auf der Strecke stationierten Vorrichtung (F1) erhalten wird.

5. Anpassungsverfahren nach einem der Ansprüche 1 bis 4, wobei der Anpassungsbefehl der Geschwindigkeit (Mr, Mr1, Mr2) ein Bremssollwert des mindestens einen Zielfahrzeugs (V1, V2, V3, V4, V5) ist.

6. Anpassungsverfahren nach Anspruch 5, wobei der Bremssollwert (Mr, Mr1, Mr2) außerdem einen Intensitätsdatenwert des Bremsens enthält.

7. Anpassungsverfahren nach einem der Ansprüche 1 bis 6, das außerdem den Empfang von dem mindestens einen Zielfahrzeug (V1, V2, V3, V4, V5) einer Bestätigungsnachricht (Mc) enthält, die einen Parameter bezüglich der aktualisierten Geschwindigkeit des mindestens einen Zielfahrzeugs (V1, V2, V3, V4, V5) enthält.

8. Anpassungsverfahren nach einem der Ansprüche 1 bis 7, wobei der Anpassungsbefehl der Geschwindigkeit (Mr, Mr1, Mr2) an das mindestens eine Zielfahrzeug (V1, V2, V3, V4, V5) unter Verwendung eines Sendemodus vom Typ Multicast gesendet wird.

9. Anpassungsverfahren nach einem der Ansprüche 1 bis 8, wobei die Bestimmung des Anpassungsbefehls der Geschwindigkeit sich auf einen Datenwert bezieht, der von einem Fahrzeug einer anderen Einheit erhalten wird.

10. Vorrichtung zur Anpassung der Geschwindigkeit mindestens eines Fahrzeugs (V1, V2, V3, V4, V5), das zu einer ersten Einheit von mindestens zwei autonomen Fahrzeugen gehört, die sich koordiniert auf einer Strecke bewegen, angewendet in einer Verwaltungsentität einer Telekommunikationsinfrastruktur, die geeignet ist, eine Nachricht an das mindestens eine Fahrzeug zu übertragen, und enthält:
- ein Erhaltsmodul, das geeignet ist, eine Ereignisinformation (Mf) von einem Fahrzeug (V1) der ersten Einheit und bezüglich eines auf der Strecke stattfindenden Ereignisses zu erhalten, wobei die Information eine Kennung des Fahrzeugs (V1) enthält, die einer Kennung der ersten Einheit zugeordnet ist,
- ein Identifizierungsmodul, das geeignet ist, mindestens ein Zielfahrzeug (V1, V2, V3, V4, V5) und mindestens eine zweite Einheit von Fahrzeugen abhängig vom bestimmten sendenden Fahrzeug ausgehend von der Kennung des die erhaltene Ereignisinformation sendenden Fahrzeugs zu identifizieren,
- ein Bestimmungsmodul, das geeignet ist, einen Anpassungsbefehl der Geschwindigkeit des mindestens einen Zielfahrzeugs (V1, V2, V3, V4, V5) abhängig von der erhaltenen Ereignisinformation zu bestimmen,
- einen Sender, der geeignet ist, an das mindestens eine identifizierte Fahrzeug (V1, V2, V3, V4, V5) und an eine zweite Verwaltungsentität (Op2) einer Telekommunikationsinfrastruktur, die für die mindestens eine zweite identifizierte Einheit zuständig ist, den Anpassungsbefehl der Geschwindigkeit (Mr, Mr1, Mr2) des mindestens einen Zielfahrzeugs (V1, V2, V3, V4, V5) zu senden.

11. System zur Anpassung der Geschwindigkeit mindestens eines Fahrzeugs (V1, V2, V3, V4, V5), das zu einer Einheit von mindestens zwei autonomen Fahrzeugen gehört, die sich koordiniert auf einer Strecke bewegen, angewendet in einer Verwaltungsentität einer Telekommunikationsinfrastruktur, und enthaltend:
- eine Anpassungsvorrichtung nach Anspruch 10,
- mindestens ein Fahrzeug (V1, V2, V3, V4, V5), das einen Empfänger eines Anpassungsbefehls (Mr, Mr1, Mr2) der Geschwindigkeit enthält.

12. System zur Anpassung der Geschwindigkeit nach Anspruch 11, das außerdem enthält
- ein Fahrzeug (V1, V2, V3, V4, V5) der ersten Einheit, wobei das Fahrzeug einen Sender einer Ereignisinformation bezüglich eines auf der Strecke stattfindenden Ereignisses enthält, wobei die Information eine Kennung des Fahrzeugs (V1) enthält, die einer Kennung der ersten Einheit zugeordnet ist.

13. Computerprogramm, **dadurch gekennzeichnet, dass** es Anweisungen zur Durchführung der Schritte des Anpassungsverfahrens nach Anspruch 1 enthält, wenn dieses Verfahren von einem Prozessor ausgeführt wird.

14. Speicherträger, der von einer Anpassungsvorrichtung nach Anspruch 10 lesbar ist, auf dem das Programm nach Anspruch 13 gespeichert ist.

## Claims

1. Method for adjusting the speed of at least one vehicle (V1, V2, V3, V4, V5) belonging to a first set of at least two autonomous vehicles moving in a coordinated manner on an itinerary, comprising the following steps implemented in an entity (Op1) for managing a telecommunications infrastructure which is able to transmit a message to the at least one vehicle:
- acquiring event information (Mf) originating from a vehicle (V1) in the first set and relating to an event occurring on said itinerary, said information comprising an identifier of the vehicle (V1) associated with an identifier of the first set,
- identifying at least one target vehicle (V1, V2, V3, V4, V5) and at least one second set of vehicles in accordance with the transmitting vehicle determined on the basis of the identifier of the vehicle transmitting the acquired event information,
- determining an instruction to adjust the speed of the at least one target vehicle (V1, V2, V3, V4, V5) in accordance with the acquired event information,
- transmitting, to the at least one identified vehicle (V1, V2, V3, V4, V5) and to a second entity (Op2) for managing a telecommunications infrastructure in charge of the at least one second set, said instruction to adjust the speed (Mr, Mr1, Mr2) of the at least one target vehicle (V1, V2, V3, V4, V5).

2. Adjustment method according to Claim 1, wherein the acquired event information (Mf) relates to the braking of said vehicle (V1) in the first set.

3. Adjustment method according to Claim 1 or Claim 2, wherein the event information (Mf) acquired by the management entity is also received by the vehicle (V2) following the vehicle (V1) transmitting the event information (Mf) in the first set.

4. Adjustment method according to any one of Claims 1 to 3, wherein the event information (Mi2) is acquired from a device (F1) deployed on the itinerary.

5. Adjustment method according to any one of Claims 1 to 4, wherein the speed adjustment instruction (Mr, Mr1, Mr2) is a braking setpoint for the at least one target vehicle (V1, V2, V3, V4, V5).

6. Adjustment method according to Claim 5, wherein the braking setpoint (Mr, Mr1, Mr2) further comprises a braking intensity datum.

7. Adjustment method according to any one of Claims 1 to 6, further comprising receiving, from the at least one target vehicle (V1, V2, V3, V4, V5), an acknowledgement message (Mc) comprising a parameter relating to the updated speed of the at least one target vehicle (V1, V2, V3, V4, V5).

8. Adjustment method according to any one of Claims 1 to 7, wherein the speed adjustment instruction (Mr, Mr1, Mr2) is transmitted to the at least one target vehicle (V1, V2, V3, V4, V5) using a multicast transmission mode.

9. Adjustment method according to any one of Claims 1 to 8, wherein determining the speed adjustment instruction relates to a datum acquired from a vehicle in another set.

10. Device for adjusting the speed of at least one vehicle (V1, V2, V3, V4, V5) belonging to a first set of at least two autonomous vehicles moving in a coordinated manner on an itinerary, implemented in an entity for managing a telecommunications infrastructure, which is able to transmit a message to the at least one vehicle, and comprising:
- an acquisition module, which is able to acquire event information (Mf) originating from a vehicle (V1) in the first set and relating to an event occurring on said itinerary, said information comprising an identifier of said vehicle (V1) associated with an identifier of the first set,
- an identification module, which is able to identify at least one target vehicle (V1, V2, V3, V4, V5) and at least one second set of vehicles in accordance with the transmitting vehicle determined on the basis of the identifier of the vehicle transmitting the acquired event information,
- a determination module, which is able to determine an instruction to adjust the speed of the at least one target vehicle (V1, V2, V3, V4, V5) in accordance with the acquired event information,
- a transmitter, which is able to transmit, to the at least one identified vehicle (V1, V2, V3, V4, V5) and to a second entity (Op2) for managing a telecommunications infrastructure in charge of the at least one identified second set, said instruction to adjust the speed (Mr, Mr1, Mr2) of the at least one target vehicle (V1, V2, V3, V4, V5).

11. System for adjusting the speed of at least one vehicle (V1, V2, V3, V4, V5) belonging to a set of at least two autonomous vehicles moving in a coordinated manner on an itinerary, implemented in an entity for managing a telecommunications infrastructure, and comprising:
- an adjustment device according to Claim 10,
- at least one vehicle (V1, V2, V3, V4, V5) comprising a receiver of a speed adjustment instruction (Mr, Mr1, Mr2) .

12. Speed adjustment system according to Claim 11, further comprising a vehicle (V1, V2, V3, V4, V5) in the first set, said vehicle comprising a transmitter of event information relating to an event occurring on said itinerary, said information comprising an identifier of said vehicle (V1) associated with an identifier of the first set.

13. Computer program, **characterized in that** it comprises instructions for implementing the steps of the adjustment method according to Claim 1, when this method is executed by a processor.

14. Storage medium which can be read by an adjustment device according to Claim 10, on which the program according to Claim 13 is stored.
